# EUROPEAN PATENT APPLICATION

(11) **EP 4 075 180 A1**
(43) Date of publication of application: **19.10.2022**
(21) Application number: 21168021.0
(22) Date of filing: 13.04.2021
(51) Int. Cl.: G02B 21/00, G02B 21/36, G02B 27/58

(54) **METHOD, DEVICE AND COMPUTER PROGRAM FOR DETERMINING A POSITION OF AT LEAST ONE EMITTER IN A SAMPLE**

(71) Applicant: Abberior Instruments GmbH, 37077 Göttingen (DE)
(72) Inventor: DONNERT, Gerald, 37077 Göttingen (DE); SCHMIDT, Roman, 37077 Göttingen (DE)

(57) **Abstract**

The invention relates to a method for determining a position of at least one emitter (F) in a sample (S), wherein according to at least one measuring parameter (MP), the sample (S) is illuminated by activation light (A) to activate at least one emitter (F), and in at least one localization step: the sample (S) is illuminated by an excitation light intensity distribution (100) comprising a local minimum (101) flanked by maxima (102) to excite the at least one emitter (F), the excitation light intensity distribution (100) is positioned at a plurality of probing positions (201) determined based on an initial position value, an emission signal from the at least one emitter (F) is detected for each of the probing positions (201), at least one final position value is determined from the emission signals and the associated probing positions (201), and a position of the at least one emitter (F) is estimated based on the at least one final position value, wherein a speed parameter is adjusted by a user input wherein the at least one measuring parameter is adjusted based on the adjusted speed parameter (SP), and wherein an average time between a start of the illumination of the sample (S) by the activation light (A) and the estimation of the position of the at least one emitter (F) depends on the speed parameter (SP). The invention further relates to a device (1) and a computer program for implementing the method.

## Description

### Technical area of the invention

The invention relates to a method, a device and a computer program for determining a position of emitters in a sample, particularly by a MINFLUX localization method (also termed MINFLUX nanoscopy or MINFLUX microscopy).

### Prior art

Localization and single molecule tracking methods based on the MINFLUX procedure have been described in the prior art, e.g., in patent applications DE 10 2011 055 367 A1, WO 2015/052186 A1, the patent publication DE 10 2013 114 860 B3, and in the publication by Balzarotti F, Eilers Y, Gwosch KC, Gynna, A, Westphal V, Stefani F, Elf J and Hell SW "Nanometer resolution imaging and tracking of fluorescent molecules with minimal photon fluxes", arXiv:1611.03401 [physics.optics] (2016).

Essentially, a sample containing emitters is probed by an intensity distribution of excitation light which excites a single emitter triggering the emission of fluorescence photons. The intensity distribution has a local minimum (particularly having an intensity close to zero at a center of the distribution) flanked by maxima. Such distributions are known, e.g., from STED microscopy, where an intensity distribution of depletion light with a central minimum (e.g., a 2D or 3D donut) is formed to deplete fluorescence signals from off-center emitters, increasing the effective resolution beyond the diffraction limit.

MINFLUX nanoscopy, however, makes use of the fact that a minimum fluorescence signal (ideally zero) is obtained if the emitter of interest is positioned exactly at the minimum of the excitation light distribution, whereas the fluorescence signal increases as the distribution is moved away from the minimum. In MINFLUX localization, the excitation light distribution is sequentially positioned at several locations (forming a so-called 'targeted coordinate pattern', TCP, or 'set of target coordinates', STC) close to an expected position of the emitter, a fluorescence signal is measured at each of these positions, and a position estimate of the emitter is determined from the measured fluorescence signals and the corresponding positions of the excitation light distribution, e.g., by a least mean square estimator.

This process is typically iterated, i.e., the process is repeated by placing the minimum of the excitation light distribution at locations around the position estimate obtained in the previous step. In particular, the minimum is placed within a radius around the current position estimate, wherein the radius decreases in each step, which results in an improved effective resolution in each step, converging to values as low as 1 nm depending on the sample and measurement parameters.

MINFLUX localization is highly photon-efficient, since less and less light is emitted by the emitter as the positions of the excitation minimum get closer to the actual position of the emitter.

Most MINFLUX implementations according to the prior art use switchable emitters which can be transferred into an active state by activation light. In the active state, the emitters emit fluorescence light if illuminated by excitation light. By illuminating the sample with a focused activation beam only a partial volume of the sample is exposed to the activation light, and consequently only a part of the emitters in the sample is activated.

According to the prior art, it is essential in most MINFLUX methods to obtain a single emitter in a so-called catch area in the sample, where the emitter is then localized by moving the excitation light distribution and detecting fluorescence photons. The exceptions described below relate to specific localization or tracking methods adapted to certain experimental conditions.

US 9,291,562 B2 describes a MINFLUX tracking method, by which two fluorophores are alternately tracked by periodic scanning of the excitation light distribution along a line. The position of the two fluorophores is estimated from the distance of the resulting emission minima. This method requires ab initio positional information on the fluorophores to adjust the direction of the line scan.

DE 10 2013 114 860 A1 discloses a localization method, in which an excitation light distribution with a local minimum is raster scanned over a sample. Given a certain minimum distance between two fluorophores, their positions can be estimated from the minima of the detection PSF. However, the fluorophores must be exposed to high intensities of the excitation light to reduce the minimum distance to values below the diffraction limit, which bears the danger of photobleaching and phototoxicity.

However, in most prior art methods, the sample is sparsely labeled with emitters and the intensity of the activation light is set to relatively low values to activate only one emitter.

By determining the position of several single emitters in a sample sequentially in a plurality of steps using the MINFLUX method, a fluorescence image of the sample with resolutions in the range of 1-10 nm can usually be constructed.

Due to this accumulation of steps to construct an image, it is very important to perform the individual steps within a minimum amount of time to avoid long image acquisition times.

However, an essential and often time-consuming sub-step of each localization step is searching and pre-localizing an emitter. Searching an emitter is necessary due to the relatively low density of activated emitters in the sample. In addition, initial coarse positional information on the emitter of interest is required to determine a starting location of the excitation light distribution in the vicinity of the actual emitter position.

For instance, it is sometimes possible to identify and coarsely localize single emitters by widefield illumination and camera imaging similar to PALM/STORM microscopy (see, e.g., DE 10 2011 055 367 A1). In other implementations according to the prior art, the sample is confocally scanned with a Gaussian shaped excitation beam and the fluorescence signal is measured by a point detector. Upon detection of a fluorescence signal above a background level the scanning process is stopped and the sample is probed with the Gaussian shaped excitation beam at several locations in the vicinity of the current scanning position to obtain a coarse position estimate of the emitter (Balzarotti F, Eilers Y, Gwosch KC, Gynna, A, Westphal V, Stefani F, Elf J, Hell SW "Nanometer resolution imaging and tracking of fluorescent molecules with minimal photon fluxes", arXiv:1611.03401 [physics.optics] (2016)).

Depending on the sample, the type of emitter and the labeling density, this search and pre-localization process may take significantly longer than the actual MINFLUX localization sequence and may therefore slow down the overall localization and imaging or tracking process.

In certain MINFLUX implementations, long acquisition times may be acceptable, whereas for others, high localization speed may be of utmost importance.

### Objective problem

Therefore, the objective problem underlying the present invention is to provide a method, device and computer program for determining the position of at least one emitter in a sample, particularly by a MINFLUX method, which allows a flexible adaptation of the localization speed.

### Solution

This objective is attained by the method according to claim 1, the device according to claim 12 and the computer program according to claim 15. Embodiments of the invention are specified in sub claims 2 to 11 (method) and 13 to 14 (device) and are described hereafter.

### Description of the invention

A first aspect of the invention relates to a method for determining a position of at least one emitter in a sample, wherein, according to at least one measuring parameter in at least one localization step:
- the sample is illuminated by an excitation light intensity distribution of excitation light to excite at least one emitter in the sample, wherein the excitation light intensity distribution comprises a local minimum flanked by maxima,
- the excitation light intensity distribution is positioned at a plurality of probing positions determined based on an initial position value,
- an emission signal from the at least one emitter is detected for each of the probing positions,
- at least one final position value is determined from the emission signals and the associated probing positions, and
- a position of the at least one emitter is estimated based on the at least one final position value.

The term 'emitter' as used in the present specification, relates to a molecule or a particle capable of emitting light, particularly fluorescence light. In particular, the emitter is a fluorophore or is coupled to a fluorophore.

Within the scope of the present specification, the term 'excitation' describes a transfer of light energy to an emitter by excitation light of a suitable wavelength resulting in a transition from an energetic ground state into a higher-energy excited state of the emitter, from which the emitter spontaneously returns into the ground state upon emission of light.

In certain embodiments, particularly prior to the at least one localization step, the sample is illuminated by activation light to activate the at least one emitter in the sample, such that the at least one emitter emits emission light when excited by the excitation light, particularly according to the at least one measuring parameter.

'Activation' of an emitter describes a forced transition, particularly by illumination with activation light of a suitable wavelength, of an emitter from an inactive ('dark') state into an active ('bright') state, wherein the emitter is capable of emitting light when excited by excitation light in the active state.

The sample may be illuminated by the activation light prior to the at least one localization step, and the activation light may be switched off when the at least one localization step is initiated. Alternatively, the sample may be continuously illuminated by the activation light during the at least one localization step. Furthermore, the activation light may be provided to the sample only at certain times during the localization step.

In particular, the sample is illuminated by an activation light beam (e.g., a continuous or pulsed laser beam) which is focused into the sample. This has the advantage that emitters are only activated in a part of the sample, which particularly prevents photo-bleaching of emitters in the rest of the sample.

In the at least one localization step, the sample is illuminated by an excitation light intensity distribution. The local minimum of the excitation light distribution is arranged at the focus in the sample, intersecting the focal plane. Such an intensity distribution with a local minimum can be generated, e.g., by modulating a phase distribution of a coherent excitation light beam (such as a laser beam) in a plane which is conjugated to a pupil plane of the objective through which the excitation light beam is focused into the sample. This results in formation of the desired light intensity distribution at the focus by interference of the phase modulated light beam. For instance, to generate a 3D donut-shaped excitation light distribution (a light distribution with a minimum flanked by maxima in all directions, i.e., both in the focal plane and along the optical axis), a phase pattern comprising a ring arranged coaxially around a circular disk, wherein the phase of the ring is shifted by a value of π in respect of the circular disk, may be provided in the conjugated plane. A 2D donut-shaped excitation light distribution (a light distribution with a minimum flanked by maxima in the focal plane) may be generated by providing a vortex shaped phase pattern increasing gradually from 0 to 2π in a circumferential direction with respect to an optical axis, along which the excitation light beam propagates. The phase pattern may be provided, e.g., in an adjustable manner, superimposed with a blazed grating on an active surface of a spatial light modulator. Alternatively, e.g., the phase pattern may be provided on a transmissive phase plate, which the excitation light beam transmits.

The excitation light intensity distribution is positioned at a plurality of probing positions. Therein, in particular, the minimum of the excitation light distribution is sequentially positioned at the probing positions.

The probing positions are determined based on the initial position value. In particular, the probing positions form a set of targeted coordinates (STC, also termed targeted coordinate pattern, TCP), arranged, particularly symmetrically, around the initial position value. More particularly, the probe positions may be arranged at the initial position value itself as well as on a sphere (in case of a 3D MINFLUX localization) or a circle (in case of a 2D MINFLUX localization) around the initial position value, wherein the center of the sphere or circle is the initial position value. The probe positions on the circle may form, e.g., a triangle or a hexagon, and the probe positions on the sphere may form, e.g., a tetrahedron.

The initial position of the emitter may be determined by a MINFLUX localization or by an independent localization method, such as PALM/STORM microscopy or confocal scanning with a Gaussian shaped excitation beam. In particular, the initial position is determined in the search step according to embodiments of the invention.

An emission signal, particularly a fluorescence signal, is obtained for each probe position. The emission signal is a signal which depends on the amount of emission light emitted by the emitter. In particular (in case a detector capable of detecting single photons is used), the emission signal is a photon count rate, i.e., a number of photons detected per unit of time.

The final position value is determined from the pairs of probe positions and corresponding emission signals. As a result of the excitation light distribution having a local minimum, the detected emission signal depends on the distance between the actual position of the emitter and the local minimum of the excitation light distribution: The closer the emitter is to the minimum, the less photons are detected. Hence, the final position value can be determined, e.g., by a least mean square algorithm from the probe positions and emission signals.

The emission signal may be detected by a point detector, e.g., a photomultiplier tube, an avalanche photodiode (APD) or a hybrid detector, or a two-dimensional array of such detectors arranged in a confocal plane in a detection beam path (in case of confocal illumination of the sample). Alternatively, e.g., in case of widefield illumination, the detector may be a camera. The detector may be adapted to detect single photons. In this case, the emission signal is particularly a photon count rate defined by the number of detected photons per unit of time.

In certain embodiments, the localization step is performed iteratively, in other words: In a first iteration, a first position value is determined from the initial position value by illuminating the sample by the excitation light intensity distribution, wherein the excitation light intensity distribution is positioned at a plurality of probing positions determined based on the initial position value, an emission signal from the at least one emitter is detected for each of the probing positions, and a first position value is determined from the emission signals and the associated probing positions. Subsequently, in a second iteration, the sample is illuminated by the excitation light intensity distribution, wherein the excitation light intensity distribution is positioned at a plurality of probing positions determined based on the first position value, an emission signal from the at least one emitter is detected for each of the probing positions, and a second position value is determined from the emission signals and the associated probing positions. Optionally, in at least one further iteration following the second iteration, the sample is illuminated by the excitation light intensity distribution, wherein the excitation light intensity distribution is positioned at a plurality of probing positions determined based on the previous position value, an emission signal from the at least one emitter is detected for each of the probing positions, and a new position value is determined from the emission signals and the associated probing positions. In the last iteration, the final position value is determined, and a position of the at least one emitter is estimated from the final position value. For instance, in case of only two iterations of the localization step, the final position value is identical to the second position value determined as stated above. In this manner, the final position value depends on the initial position value and optionally on all of the position values determined in further iterations.

In particular, the probe positions form an STC comprising probe positions arranged on a sphere or circle in each of the iterations, wherein a radius of the sphere or circle is adjusted, particularly reduced, in a plurality of the iterations relative to the previous iteration (in the first iteration the radius is set to a pre-defined starting value). This results in a more and more accurate position estimation in each iteration. Furthermore, in particular, the excitation light intensity (e.g., the laser power of a laser source generating the excitation light beam) is increased in each iteration to compensate for the lower emission signal resulting from the probing positions being closer to the actual position of the emitter.

In certain embodiments, a speed parameter is adjusted by a user input, wherein the at least one measuring parameter is adjusted based on the adjusted speed parameter, and wherein an average time between a start of the method, particularly a start of the illumination of the sample by the activation light, and the estimation of the position of the at least one emitter depends on the speed parameter.

In certain embodiments, the user input comprises a selection from at least a slow operating mode and a fast operating mode, wherein the at least one measuring parameter is adjusted based on the user input (that is based on whether the slow operating mode, the fast operating mode or optionally another operating mode has been selected by the user), and wherein the average time between the start of the illumination of the sample by the activation light and the estimation of the position of the at least one emitter is shorter in the fast operating mode than in the slow operating mode.

The actual time of position estimation will vary in each localization step or sequence of localization steps, e.g., dependent on the actual position of the emitter in the sample and the initial position value. Therefore, the average time needed when repeating the method according to the invention to localize a number of emitters, is influenced by the speed parameter.

The speed parameter reflects the average time between initiation of the search step and the determination of the final position value. For example, adjusting the speed parameter may be accomplished by a selection between two categories (e.g., 'fast' and 'slow'), a selection between more than two categories (e.g., 'very fast', 'fast', 'moderate', 'slow' and 'very slow') direct adjustment of the speed parameter, e.g., between values of 1 and 100, or directly entering a desired average speed or a desired average time.

The user input may be received via a user interface. To generate the user input, the user may, e.g., manipulate an item on a graphical user interface (GUI) displayed on a display device. This item may be, e.g., a slider which can be moved between two or more positions representing the operating modes, e.g., by a drag-and-drop operation using a computer mouse or a swipe operation on a touch screen. Alternatively, e.g., clickable or touch-activatable buttons representing the slow operating mode and the fast operating mode may be provided on a GUI, or a check box indicating the fast operating mode may be checked and unchecked using touch or mouse-click operations. Furthermore, a field for direct entry of the speed parameter may be provided on a GUI.

In particular, the at least one measuring parameter, which is adjusted based on speed parameter, is a light intensity of the activation light and/or a light intensity of the excitation light.

By adjusting the speed parameter, the user can flexibly adapt the measuring parameters to optimize localization speed for the desired application. Advantageously, the automatic adaptation of the measurement parameters improves the usability of the MINFLUX method especially for less experienced users.

In certain embodiments, in a search step prior to the at least one localization step, the sample is illuminated by the activation light to activate the at least one emitter, the sample is illuminated by the excitation light to excite the at least one emitter, a further emission signal from the at least one emitter is detected, and the initial position value of the at least one emitter is determined based on the further emission signal.

The search step may also be designated as 'search and pre-localization step', as the emitter is not only identified, but its position in the sample is also estimated (initial position value), particularly with low accuracy. The initial position value is then used in the subsequent localization step (MINFLUX localization) to determine an initial position of the excitation light intensity distribution (see below).

In the search step, the excitation light may be provided in the sample by widefield illumination or by scanning a focused excitation light beam (e.g., a continuous or pulsed laser beam) through the sample (confocal illumination), particularly by providing the light beam through a microscope objective. The excitation light beam may result in an excitation light distribution at the focus in the sample, wherein the excitation light distribution may have, e.g., a Gaussian shape with a single intensity maximum. Alternatively, e.g., an excitation light distribution with a local minimum (e.g., having a 2D-donut shape or a 3D-donut shape, also termed bottle beam) may be used in the search step similarly to the localization step described below.

In certain embodiments, in the search step, an excitation light beam is moved to a plurality of positions with respect to the sample, the emission signals corresponding to the positions are detected by the detector, and the initial position value is determined once the detected emission signal exceeds a pre-defined threshold. The initial position value may be determined, e.g., by a least mean square algorithm from the positions of the excitation light beam and the corresponding emission signals.

In certain embodiments, in the search step, the sample is illuminated by an excitation light distribution comprising a local minimum flanked by maxima, wherein a projection of a detection pinhole (arranged in a detection beam path between the sample and the detector) into a focal plane in the sample is shifted to a plurality of pinhole positions (e.g., on a circular trajectory) while the excitation light distribution remains stationary with respect to the sample, wherein emission signals corresponding to different pinhole positions are detected, particularly by a point detector, and wherein the initial position value is obtained from the pinhole positions and the corresponding emission signals. This may be implemented, e.g., by altering the detection beam path by means of a first scanning device, e.g., a galvanometric scanner, while compensating the resulting shift of an illumination beam path between an excitation light source and the sample by at least a second scanning device (e.g., one or more electrooptical deflectors). This embodiment, which is also termed 'pinhole orbit scanning' herein, has the advantage that the same excitation light distribution can be used for efficient pre-localization and MINFLUX localization, which obviates the need to switch between different beam shapes during the method according to the invention.

In certain embodiments, in the search step, the emission signals are collected by a plurality of detector elements (point detectors, e.g., APDs) of an array detector to sample a spatial distribution of the emitted light, wherein the initial position value is obtained from the emission signals detected by the detector elements. In this embodiment, the spatial light distribution of the emission light in a detector plane is directly sampled or determined. From this positional information, the initial position estimate of the at least one emitter can be derived.

In certain embodiments, in the search step, the sample is scanned with the excitation light at a plurality of scanning positions, wherein at each scanning position, the emission signal is detected, until the detected emission signal exceeds a pre-defined threshold.

In certain embodiments (particularly in case the speed parameter has been adjusted to a value indicating a slow operating mode) the intensity of the activation light is adjusted, particularly in the search step, such that an average of one emitter is activated in a reference volume within the maxima of the excitation light distribution, and wherein (particularly in case the speed parameter has been adjusted to a value indicating a fast operating mode) the intensity of the activation light is adjusted in the search step, such that an average of at least two emitters are activated in the reference volume.

In particular, the intensity of the activation light is adjusted, particularly in the search step, such that an average of 2 to 10 emitters, more particularly 2 to 9 emitters, even more particularly 2 to 8 emitters, even more particularly 2 to 7 emitters, even more particularly 2 to 6 emitters, even more particularly 2 to 5 emitters, even more particularly 2 to 4 emitters, even more particularly 2 to 3 emitters, most particularly 2 emitters, are activated in the reference volume.

The reference volume is defined by the volume within the maxima of the excitation light distribution. In other words, the reference volume is encased by the maxima of the excitation light distributions. Thus, the reference volume includes the local minimum and the adjacent positions of increasing light intensity until the maximum is reached at least in any direction in the focal plane.

The reference volume may be a sphere having a center coinciding with the local minimum and a diameter equal to a maximum-to-maximum distance of the excitation light distribution in the focal plane. Thus, according to this embodiment, e.g., in case of a 2D-donut-shaped excitation light distribution which does not comprise intensity maxima flanking the local minimum along the optical axis (in 'z-direction' perpendicular to the focal plane), the reference volume would be limited in the z-direction by the maximum-to-maximum distance in the xy-plane.

According to another alternative, the reference volume may be the volume encased by the maxima of the excitation light distribution in all directions in space. For instance, a 3D-donut-shaped excitation light distribution may result in a reference volume which is limited by the maxima of the excitation light distribution in the focal plane as well as in the z-direction.

When adjusting the speed parameter to select a fast operating mode according to the above-described embodiment, the activation light intensity (and particularly also the excitation light intensity) is increased, such that more than one emitter is activated in the reference volume. In this manner, more emission light is generated per reference volume, which may significantly shorten the time after which a threshold emission photon count is reached. Therefore, the average search and pre-localization time, which is limiting for the overall localization speed, may be decreased. In addition, in certain cases it is possible to use the emission signals of the two or more emitters to simultaneously localize the two or more emitters with high precision, e.g., as described below, which may further improve the localization speed.

In certain embodiments, a plurality of final position values is generated, in case at least two emitters have been activated in the reference volume, particularly in the fast operating mode, and the positions of the at least two emitters are simultaneously estimated from the final position values.

In the context of the present specification, 'simultaneously estimating the positions' of the at least two emitters means that that the positions are estimated from a single set of position data obtained from the simultaneously activated emitters in the reference volume, i.e., without separately searching and localizing the emitters one after another. Of course, the actual computation of the position estimates of the emitters will typically not occur strictly simultaneously.

The plurality of final position values contains information about the different emitters that have generated the emittance signals. In particular, the plurality of final position values is generated by repeating the localization step. Importantly, this repetition of the localization step is particularly not aimed at improving the localization accuracy, as the above-described iterations (in particular, the localization step is repeated without adjusting a diameter of the STC and without increasing the excitation light intensity). Instead, the localization step is repeated to obtain independent measurements, from which positional information about the two or more emitters can be derived. In particular, each of these repetitions may in turn comprise a plurality of iterations of the localization step (as described above).

Importantly, in case of two or more emitters, some of the final position values will not directly indicate a position estimate of a single emitter but will rather reflect a positional average of the two or more emitters. However, for instance, in case of blinking emitters (which stochastically cycle between an active light emitting state and an inactive state), there may be times, in which certain emitters are inactive, but others are emitting light. For example, the positional values obtained from the plurality of repetitions of the localization step (in some of which certain emitters are inactive) can be further analyzed to extract information about the positions of the individual emitters.

The simultaneous estimation of the positions of the at least two emitters may be performed in real time during the localization method, e.g., in each iteration resulting in a new position estimate. Alternatively, the simultaneous estimation of the positions of the at least two emitters may be included in a post-processing step.

As explained above, the position values obtained during localization steps may describe an average position of two or more fluorophores. During an iterative MINFLUX localization procedure, such a position value may result in the STC being centered on an average emitter position rather than an estimate of a single emitter position. Thus, the two or more emitters will be exposed to higher intensities of the excitation light than during a MINFLUX sequence where only one emitter is localized. In certain cases, this may lead to photobleaching of one of the emitters before the end of the localization procedure. In case of two emitters being followed simultaneously, such a bleaching event will result in localization of a single emitter subsequently to the bleaching event. If the position information on the other emitter prior to the bleaching event cannot be used for a localization with sufficient precision, the apparent labeling density of an image constructed from several MINFLUX localization will be decreased as a consequence of the faster localization due to simultaneous activation of more than one emitter.

In certain embodiments, a spatial distribution is generated from the final position values, wherein the positions of the at least two emitters are simultaneously estimated based on the spatial distribution. Therein, in particular, each final position value is obtained from a corresponding repetition of the localization step. The spatial distribution of the at least two emitters can be visualized as a 2D or 3D plot of the final position values, wherein each data point represents the result of a respective repetition of the localization step. E.g., if certain emitters have been inactive during a subset of the repetitions, the final position values of this subset will be grouped in the spatial distribution, and the center of the respective group may indicate the positional average of the emitters which were active in the subset. In the simple case of two emitters, three groups of final position values may be observed in the spatial distribution: a first group incorporating the position values from repetitions in which a first emitter was active but a second emitter was inactive, a second group comprising the position values from repetitions in which the first emitter was inactive and the second emitter was active, and a third group comprising the position values obtained from repetitions in which both the first and the second emitter were active. The position of the first emitter may be estimated from the center of the first group and the position of the second emitter may be estimated from the center of the second group. The center of the third group would represent the positional average of the first and the second emitter.

In certain embodiments, the emitters are capable of entering an inactive state in which the emitters are unable to emit light or unable to be excited by the excitation light.

In certain embodiments, a time trace of the emission signals is obtained, wherein a decrease, particularly a stepwise decrease, of the emission signal in the time trace indicates one of the emitters entering the inactive state and an increase, particularly a stepwise increase, of the emission signal in the time trace indicates one of the emitters leaving the inactive state, wherein information from the time trace about the emitters entering or leaving the inactive state is used to simultaneously estimate the positions of the at least two emitters.

The emission signals forming the time trace may be obtained during a single localization step or over several iterations and/or several repetitions of the localization step.

In particular, the positions of the at least two emitters are estimated using the information from the time trace about the emitters entering or leaving the inactive state in real time during the localization method. Alternatively, the information about the emitters entering or leaving the inactive state from the time trace is applied during a post-processing step after the localization, in which the position estimates of the emitters are further optimized.

In particular, a plurality of data segments is obtained from the time trace, wherein each data segment corresponds to a state in which the same number of emitters have been active and the same number of emitters have been inactive, and wherein the positions of the at least two emitters are simultaneously estimated from the plurality of data segments.

In certain embodiments, in case the detected emission signal, particularly the further emission signal detected in the search step, exceeds a background emission signal, the activation light is automatically switched off and/or the at least one localization step is automatically initiated. In other words, once the detected emission signal reaches a pre-set threshold indicating a signal over the background, the activation light is switched off and/or the at least one localization step is initiated.

In the context of the present specification, 'switching off the activation light means that the illumination of the sample by the activation light is ceased by any suitable means, e.g., switching off an activation light source, decreasing the light intensity of the activation light source, e.g., by an acousto-optical element, or altering the light path of the activation light, e.g., such that the activation light is directed to a beam dump.

In certain embodiments the pre-set threshold of the emission signal exceeds an average emission signal by at least one standard deviation (of a probability distribution of the emission signal). In case of single photon counts, the probability distribution is particularly a Poisson distribution.

In certain embodiments the pre-set threshold of the emission signal exceeds an emission signal associated to background emission (e.g., an average emission signal) by at least 10 photons, particularly at least 5 photons, more particularly at least 2 photons, most particularly at least 1 photon.

In certain embodiments, the intensity of the excitation light is automatically reduced in case the detected emission signal, particularly the further emission signal detected in the search step, exceeds a background emission signal. A higher excitation light intensity is advantageous particularly in the search step to increase the signal-to-background ratio. However, in later localization steps, lower excitation light intensities are required, in particular to obtain a linear detector signal, and therefore improve the localization accuracy.

In this manner, the localization speed is further increased while ensuring that further emitters in the sample are not photo-bleached or damaged.

In particular, the activation light is switched off and the at least one localization step is initiated by an integrated circuit, particularly a field programmable gate array (FPGA) or an application specific integrated circuit (ASIC). This reduces the response time and therefore contributes to the speed of the MINFLUX localization.

In certain embodiments, an emission lifetime of the at least one emitter is determined from the detected emission signal, particularly the further emission signal detected in the search step, wherein in case the determined emission lifetime is within a pre-determined range, the activation light is automatically switched off, and the at least one localization step is automatically initiated.

Therein, the term emission lifetime' designates a parameter expressing the typical (or average) time after which a photon is emitted after excitation. In case the emission light is fluorescence light, the emission lifetime is particularly the fluorescence lifetime. In particular, the emission lifetime may be determined by time-correlated single photon counting as known from the prior art.

According to this embodiment, a measured emission lifetime within a characteristic range of the emitter may reliably indicate the presence of an emission signal over the background. In contrast to merely analyzing a light intensity or a photon count, a lifetime analysis is less prone to errors due to, e.g., sudden bursts of background emission.

In certain embodiments, a spectral analysis of the detected emission signal, particularly the further emission signal detected in the search step, is performed, wherein in case the spectral analysis indicates that the emission signal is in a pre-determined spectral range, the activation light is automatically switched off, and the at least one localization step is automatically initiated.

Therein, the term 'spectral analysis' describes the analysis of the signal (i.e., photon count or intensity) for at least two wavelengths. To this end, one or several optical filters may be employed.

The spectral analysis helps to distinguish the emission signal of the emitters from background emission, and therefore reduces errors due to, e.g., bursts of background fluorescence.

In certain embodiments, the activation light is switched off and/or the localization step is initiated within a response time of 50 µs or less, particularly 45 µs or less, more particularly 40 µs or less, even more particularly 35 µs or less, even more particularly 30 µs or less, even more particularly 25 µs or less, even more particularly 20 µs or less, even more particularly 15 µs or less, even more particularly 10 µs or less, even more particularly 9 µs or less, even more particularly 8 µs or less, even more particularly 7 µs or less, even more particularly 6 µs or less, even more particularly 5 µs or less, even more particularly 4 µs or less, even more particularly 3 µs or less, even more particularly 2 µs or less, even more particularly 1 µs or less, even more particularly 900 ns or less, even more particularly 800 ns or less, even more particularly 700 ns or less, even more particularly 600 ns or less, even more particularly 500 ns or less, even more particularly 400 ns or less, even more particularly 300 ns or less, even more particularly 200 ns or less, most particularly 100 ns or less, after detection of the emission signal.

Therein, in particular, the time at which the activation light is 'switched off is defined as the time of an electronic switch-off signal. The actual decrease of the activation light intensity may be slower depending on the mechanism of switching or intensity modulation.

In particular, the determination of the initial position value of the at least one emitter in the search step is initiated within the response time prior to the initiation of the at least one localization step.

In certain embodiments, single photons emitted by the at least one emitter are detected, wherein the emission signal is derived from a count rate of the detected photons. A count rate is a number of photons detected per unit of time.

In certain embodiments, the intensity of the activation light (and particularly also the intensity of the excitation light) is automatically adjusted based on the detected emission signal, particularly based on a count rate of the detected photons. In this manner, the actual amount of activation light is constantly adjusted to the specific conditions in the sample.

In certain embodiments, a number of emitters which have been activated in the reference volume is automatically determined. In response to this determination, e.g., the algorithms for estimating the position of the emitters can be adapted accordingly.

In certain embodiments, the intensity of the activation light (and particularly also the excitation light intensity) is automatically adjusted based on the determined number of activated emitters in the reference volume. E.g., if it is determined that only one emitter has been activated in the reference volume (e.g., in the fast operating mode), the activation light intensity is automatically increased (particularly either immediately to activate a second emitter in the current reference volume or in the next search step), until it is determined that at least two emitters have been activated in the reference volume. Conversely, if it is determined that two or more emitters have been activated (e.g., in the slow operating mode), the activation light intensity may be automatically decreased, particularly in the next search step, until it is determined that only one emitter has been activated in the reference volume.

A second aspect of the invention relates to a device, particularly a MINFLUX microscope or nanoscope, for determining a position of at least one emitter in a sample, particularly by the method according to the first aspect, comprising an excitation light source configured to illuminate a sample with excitation light to excite at least one emitter and a light modulation device configured to generate an excitation light intensity distribution of the excitation light, wherein the excitation light intensity distribution comprises a local minimum flanked by maxima. The device further comprises an optical setup configured to illuminate the sample with the excitation light intensity distribution, at least one positioning device configured to position the excitation light distribution at a plurality of probing positions, a detector configured to detect an emission signal from the at least one emitter, and a computation device configured to determine the probing positions based on an initial position value, wherein the computation device is further configured to determine a final position value from the emission signals and the associated probing positions, particularly in at least one localization step, and estimate the position of the at least one emitter based on the final position value.

In certain embodiments, the device comprises an activation light source configured to illuminate the sample with activation light to activate the at least one emitter in the sample, such that the at least one emitter emits emission light when excited by the excitation light,

The microscope may be a confocal scanning microscope configured for MINFLUX localization.

The activation light source and the excitation light sources are particularly continuous or pulsed laser sources.

In particular, the light modulation device comprises a phase plate or a spatial light modulator comprising an active surface configured to display an adjustable phase pattern.

The optical setup configured to illuminate the sample with the excitation light may comprise a microscope objective.

The detector may be a point detector, such as an avalanche photodiode (APD), a photomultiplier tube or a hybrid detector or an array comprising a plurality of such point detectors arranged in a two-dimensional detector plane.

In particular, the positioning device may comprise a galvanometric scanner configured to scan an excitation light beam over the sample and de-scan the emission light from the sample to couple the emission light into a detector beam path. Furthermore, in particular, the positioning device may comprise at least one electro optical deflector configured to shift the excitation beam in a direction in the focal plane. Optionally, to shift the focus of the excitation beam along an optical axis, along which the excitation beam propagates (i.e., in the z-direction), the positioning means may comprise a deformable mirror.

The computation device may be implemented on one or several integrated circuits (e.g., FPGA or ASICS), particularly configured for fast real time data analysis and/or control of components of the device.

In certain embodiments, the device comprises a user interface configured to obtain a user input comprising an adjustment of a speed parameter, and a control device configured to adjust at least one measuring parameter based on the adjusted speed parameter, wherein an average time between a start of the method, particularly a start of the illumination of the sample by the activation light, and estimation of the position of the at least one emitter depends on the speed parameter.

The control device may be implemented on an integrated circuit, particularly the same integrated circuit, on which the computation device or part of the computation device is implemented.

In certain embodiments, the user interface is configured to obtain a user input comprising a selection from at least a slow operating mode and a fast operating mode, wherein the control device is configured to adjust the at least one measuring parameter based on the user input, and wherein an average time between a start of the illumination of the sample by the activation light and the estimation of the final position value is shorter in the fast operating mode than in the slow operating mode.

In certain embodiments, the activation light source is configured to illuminate the sample with the activation light to activate the at least one emitter in a search step prior to the at least one localization step, wherein the excitation light source and the optical setup are configured to illuminate the sample with the excitation light to excite the at least one emitter in the search step, and wherein the detector is configured to detect a further emission signal from the at least one emitter in the search step, and wherein the computation device is configured to determine the initial position value of the at least one emitter based on the further emission signal.

In certain embodiments, the positioning device is configured to move an excitation light beam generated by the excitation light source to a plurality of positions with respect to the sample in the search step, wherein the detector is configured to detect the emission signals corresponding to the positions, and wherein the computation device is configured to determine the initial position value, e.g., by a least mean square algorithm, from the positions of the excitation light beam and the corresponding emission signals.

In certain embodiments, the device comprises a detector pinhole in a detection beam path, wherein in the search step, the excitation light source, the light modulation device and the optical setup are configured to illuminate the sample by an excitation light distribution comprising a local minimum flanked by maxima, and wherein the positioning device is configured to shift a projection of the detection pinhole into a focal plane in the sample to a plurality of pinhole positions in the search step, while the excitation light distribution remains stationary with respect to the sample, wherein the detector is configured to detect emission signals corresponding to different pinhole positions, and wherein the computation device is configured to obtain the initial position value from the pinhole positions and the corresponding emission signals.

In certain embodiments, the positioning device comprises a first scanning device, particularly a galvanometric scanner, and a second scanning device, particularly comprising at least one electrooptical deflector, wherein the first scanning device is configured to alter the detection beam path, such that the projection of the detection pinhole is shifted to the pinhole positions in the focal plane, and wherein the second scanning device is configured to compensate the shift of the excitation light beam introduced by the first scanning device, such that the excitation light beam remains stationary with respect to the sample.

In certain embodiments, the detector is an array detector comprising a plurality of detector elements (point detectors, e.g., APDs), wherein the array detector is configured to collect the emission signals to sample a spatial distribution of the emitted light in the search step, wherein the computation device is configured to obtain the initial position value from the intensities detected by the detector elements.

In certain embodiments, in the search step, the positioning device is configured to scan the sample with the excitation light at a plurality of scanning positions, wherein the detector is configured to detect the emission signal at each scanning position in the search step.

In certain embodiments, the control device is configured to adjust the intensity of the activation light, particularly in the search step, such that an average of one emitter is activated in the reference volume (particularly in case the speed parameter has been adjusted to a value indicating selection of a slow operating mode) and the control device is configured to adjust the intensity of the activation light, particularly in the search step, such that an average of at least two emitters, particularly 2 to 10 emitters, more particularly 2 to 9 emitters, even more particularly 2 to 8 emitters, even more particularly 2 to 7 emitters, even more particularly 2 to 6 emitters, even more particularly 2 to 5 emitters, even more particularly 2 to 4 emitters, even more particularly 2 to 3 emitters, most particularly 2 emitters, are activated in the reference volume (particularly in case the speed parameter has been adjusted to a value indicating selection of a fast operating mode).

In certain embodiments, the computation device is configured to generate a plurality of final position values, particularly from a plurality of repetitions of the localization step, wherein in case at least two emitters have been activated in the reference volume (particularly in the fast operating mode), the computation device is configured to simultaneously determine the positions of the at least two emitters from the final position values.

In certain embodiments, the computation device is configured to generate a spatial distribution of the at least two emitters from the final position values, and the computation device is configured to simultaneously estimate the positions of the at least two emitters from an analysis of the spatial distribution.

In certain embodiments, wherein the emitters are capable of entering an inactive state in which the emitters are unable to emit light or unable to be excited by the excitation light, the computation device is configured to obtain a time trace of the emission signals, wherein the computation device is configured to use information from the time trace about the emitters entering or leaving the inactive state to determine the position of the individual emitters, wherein a decrease, particularly a stepwise decrease, of the emission signal in the time trace indicates one of the emitters entering the inactive state and an increase, particularly a stepwise increase, of the emission signal in the time trace indicates one of the emitters leaving the inactive state.

In particular, the computation device is configured to obtain a plurality of data segments from the time trace, wherein each data segment corresponds to a state in which the same number of emitters have been active and the same number of emitters have been inactive, and wherein the computation device is configured to simultaneously estimate the positions of the at least two emitters from the plurality of data segments.

In certain embodiments, the computation device, particularly implemented on an integrated circuit (e.g., an FPGA or an ASIC), is configured to determine whether the detected emission signal, particularly the further emission signal detected in the search step, exceeds a background emission signal, wherein the control device, particularly implemented on the integrated circuit, is configured to automatically switch off the activation light and/or automatically initiate the at least one localization step in response to determining that the detected emission signal exceeds the background emission signal.

In certain embodiments, the detector and the computation device, particularly implemented on an integrated circuit, are configured to determine an emission lifetime from the detected emission signal, particularly the further emission signal detected in the search step, wherein the control device, particularly implemented on the integrated circuit, is configured to automatically switch off the activation light and automatically initiate the at least one localization step in case the determined emission lifetime is within a pre-determined range.

In certain embodiments, the detector is configured for spectral detection of the emission signal, wherein the computation device, particularly implemented on an integrated circuit, is configured to perform a spectral analysis of the detected emission signal, particularly the further emission signal detected in the search step, and wherein the control device, particularly implemented on the integrated circuit, is configured to automatically switch off the activation light and automatically initiate the localization step in case the spectral analysis indicates that the emission signal is in a pre-determined spectral range.

In certain embodiments, the control device, particularly implemented on the integrated circuit, is configured to switch off the activation light and/or initiate the localization step within a response time of 50 µs or less, particularly 45 µs or less, more particularly 40 µs or less, even more particularly 35 µs or less, even more particularly 30 µs or less, even more particularly 25 µs or less, even more particularly 20 µs or less, even more particularly 15 µs or less, even more particularly 10 µs or less, even more particularly 9 µs or less, even more particularly 8 µs or less, even more particularly 7 µs or less, even more particularly 6 µs or less, even more particularly 5 |js or less, even more particularly 4 µs or less, even more particularly 3 µs or less, even more particularly 2 µs or less, even more particularly 1 µs or less, even more particularly 900 ns or less, even more particularly 800 ns or less, even more particularly 700 ns or less, even more particularly 600 ns or less, even more particularly 500 ns or less, even more particularly 400 ns or less, even more particularly 300 ns or less, even more particularly 200 ns or less, most particularly 100 ns or less, after detection of the emission signal by the detector.

In particular, the control device is configured to initiate the determination of the initial position value of the at least one emitter in the search step within the response time prior to the initiation of the at least one localization step.

In certain embodiments, the detector is configured to detect single photons emitted by the at least one emitter, wherein the detector and/or the computation device is configured to derive the emission signal from a count of the detected photons.

In certain embodiments, the control device is configured to automatically adjust the intensity of the activation light based on the detected emission signal, particularly based on a count rate of the detected photons.

In certain embodiments, the computation device is configured to automatically determine a number of emitters which have been activated in the reference volume.

In certain embodiments, the control device is configured to automatically adjust the intensity of the activation light, and particularly also the intensity of the excitation light, based on the determined number of activated emitters in the reference volume.

A third aspect of the invention relates to a computer program comprising program code comprising instructions to cause the device according to the second aspect to execute the steps of the method according to the first aspect.

Further embodiments of the invention may be derived from the claims, the description and the drawings. Therein, the claims are not to be construed in a manner such that only subjects, devices or methods respectively comprising all or none of the features of a sub claim in addition to the features of the independent claims and aspects described herein, may be possible embodiments of the invention. In contrast, further embodiments may be drawn from features stated in the description or derivable from the drawings which may be singly or cumulatively applied.

### Short description of the figures

The invention is further elucidated and described hereafter with reference to the exemplary embodiments displayed in the figures. These embodiments are non-restrictive examples which are not meant to limit the scope of the invention.
- Fig. 1: shows a flow diagram illustrating steps of the method according to the invention;
- Fig. 2: shows an example of an excitation light intensity distribution according to the invention;
- Fig. 3: schematically illustrates steps of a MINFLUX localization method;
- Fig. 4: shows an embodiment of the device according to the invention;
- Fig. 5: shows an example of a spatial distribution of final position values;
- Fig. 6: shows an example of a time trace of emission signals.

### Description of the figures

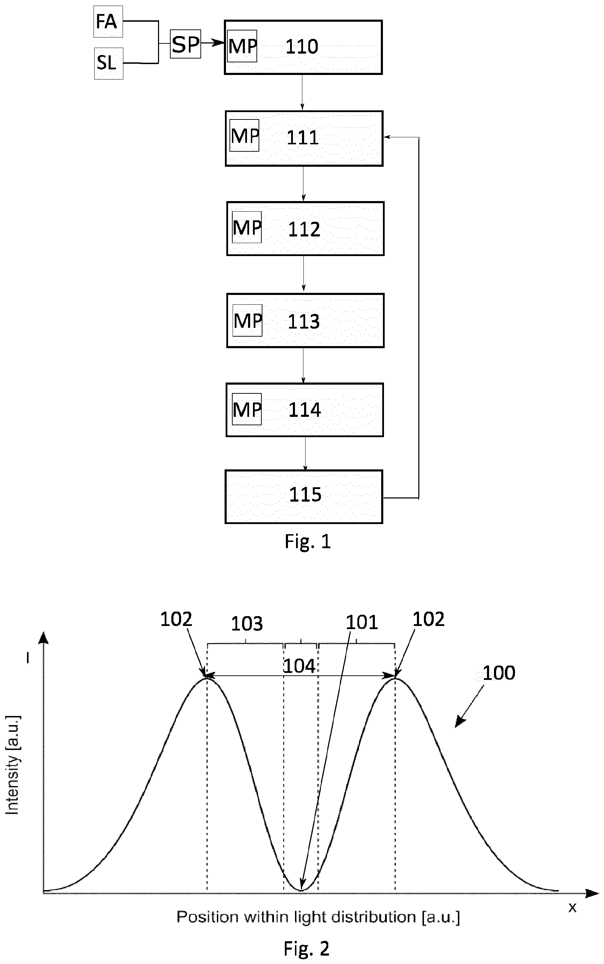

**Fig. 1** is a flow diagram illustrating steps of the method according to an embodiment of the invention. In step 110, a sample S is illuminated by activation light A to activate at least one emitter F, particularly a fluorophore, in the sample S, such that the at least one emitter F emits emission light D (e.g., fluorescence light) when excited by excitation light E. Steps 111 to 115 are sub-steps of a localization step of the method, which may be repeated in a number of iterations and/or repetitions as indicated by the arrow between sub step 115 and sub step 111.

According to sub-step 111 the sample S is illuminated by an excitation light intensity distribution 100 of the excitation light E to excite the at least one emitter F, wherein the excitation light intensity distribution 100 comprises a local minimum 101 flanked by maxima 102 (see Fig. 2).

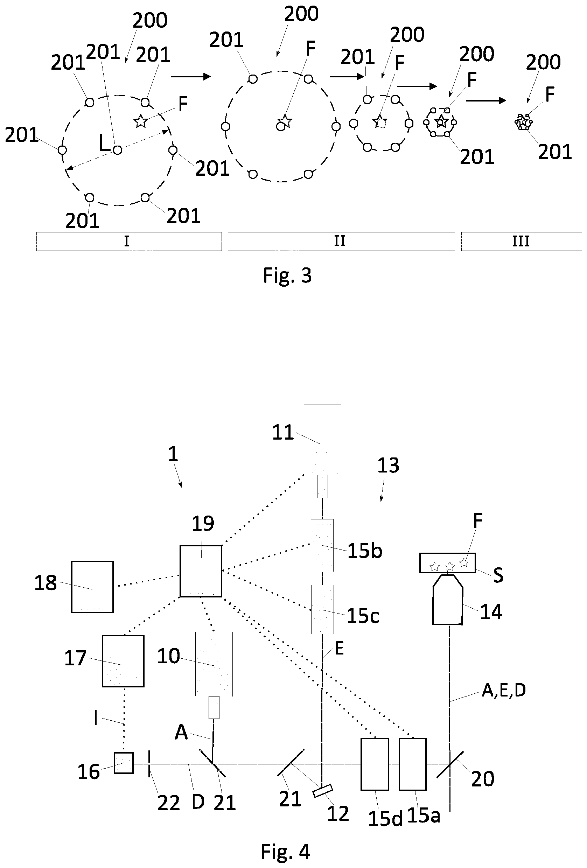

In sub-step 112, the excitation light intensity distribution 100 is positioned at a plurality of probing positions 201 forming a set of targeted coordinates STC (see Fig. 3) determined based on an initial position value of the at least one emitter F.

Furthermore, in sub-step 113, an emission signal, particularly a photon count, from the at least one emitter F is detected for each of the probing positions 201.

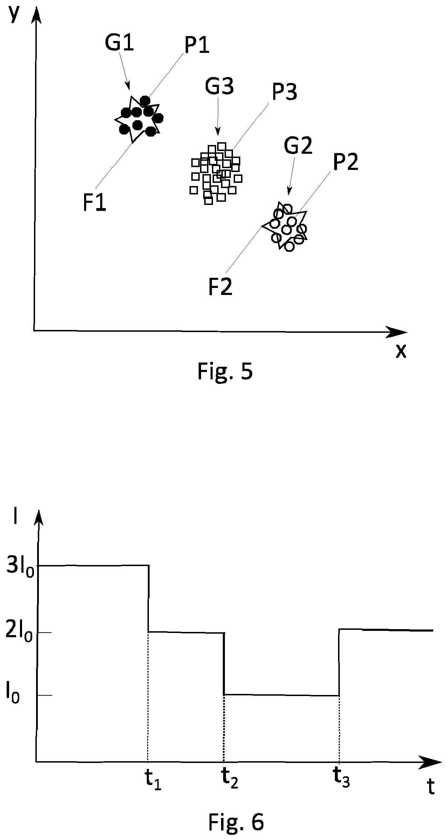

At least one final position value P1, P2, P3 (see also Fig. 5) is determined from the emission signals and the associated probing positions 201.

Finally, in sub step 115, a position of the at least one emitter F is estimated based on the at least one final position value P1, P2, P3.

By selection of a fast operating mode FA or a slow operating mode SL, a speed parameter SP is adjusted by a user input, and at least one measuring parameter MP, for example an activation light intensity or an excitation light intensity, is adjusted based on the speed parameter SP. An average time between a start of the method, e.g., a start of the illumination of the sample S by the activation light A (step 110), and the estimation of the position of the at least one emitter F (step 115) depends on the speed parameter SP.

**Fig. 2** shows an exemplary light intensity curve over a cross-section of an excitation light intensity distribution 100 in a focal plane in the sample S. The intensity I is plotted against the position within the excitation light intensity distribution 100, here along the x-axis (perpendicular to the optical axis along which the excitation beam propagates). The intensity curve shows a central local minimum 101, which is surrounded on all sides by intensity increase areas 103 and opposing maxima 102 having a maximum-to-maximum distance 104 along the x-axis. In particular, the curve shown in Fig. 2 depicts a cross-section of a 2D donut. A cross-section through a 3D donut may result in a similar intensity curve. In particular, the 3D donut also comprises a local minimum 101, particularly point of zero (or near zero) intensity, in the focal plane and is surrounded by essentially ring-shaped maxima. In addition, the 3D donut comprises intensity increases neighboring the intensity minimum along the optical axis (z-direction).

**Fig. 3** shows an example of a MINFLUX localization sequence to localize an emitter F, which may be performed according to the steps illustrated in Fig. 1. In Fig. 3, the empty circles indicate the probe positions 201 forming a set of targeted coordinates, STC, 200. During each of a number of steps (five steps are shown as an example in Fig. 3), the local minimum 101 of the excitation light intensity distribution 100 (see Fig. 2) is placed sequentially at the probe positions 201 of the respective STC 200, and emission signals, particularly photon counts from the emitter F are acquired at each of the probe positions 201. The obtained emission signals vary depending on the relative position of the emitter F and the respective probe position 201. If the emitter F is located exactly at the local minimum 101 of the excitation light intensity distribution 100, where the excitation light intensity is zero or close to zero, no emission signal is obtained above the background. At increasing distances from the local minimum 101, however, the emitter F is exposed to higher excitation light intensities (see Fig. 2), and therefore emits a higher number of photons per unit of time. From the obtained photon counts and the associated probe positions 201, the position of the emitter F can be estimated, e.g., using a least mean square estimator, as described in the prior art.

In the example shown in Fig. 3, an STC 200 comprising seven probe positions 201 arranged in the focal plane is shown. One of the probe positions 201 is at a center of a circle with a diameter L, and the other six probe positions 201 are evenly spaced around the circumference of the circle. Therein, the center of the circle corresponds to an estimated location of the emitter F. For the first step shown in Fig. 3 (labeled I), the initial position value obtained in a search step according to the present invention may be used as the position of the center.

After the first step (I), a series of further MINFLUX steps (three steps in the sub-sequence labeled II and a further final step labeled III) is performed, wherein in each step, the final position value of the emitter F determined in the previous step is used as the new center of the STC 200, i.e., the STC 200 is recentered using the previously obtained position information in each step.

In particular, the diameter L of the circle defining the STC 200 is reduced in each step or in a subset of the steps. According to Fig. 3, the diameter L remains the same between step I and the first step of sub-sequence II but is reduced in each subsequent step. In this manner, the position estimation in each iteration becomes more and more accurate. Since the local minimum 101 of the excitation light intensity distribution 100 tends to get closer to the actual position of the emitter F the smaller the circle defining the STC 200 gets, the average of the obtained photon counts also decreases. To compensate this effect, the intensity of the excitation light may be increased as the MINFLUX sequence proceeds to obtain higher photon counts and thus improve the signal-to-noise ratio.

The last step (III) is a final localization of the emitter F, where the circle delimiting the STC 200 is so small that the emission signal has decreased almost to the background, i.e., the final position value is converging to a value of a maximum accuracy according to the boundary conditions of the experiment. In typical MINFLUX applications, this accuracy may be in the range of 1-2 nm. The last step or a sequence of steps may be repeated to obtain several independent final position values.

Of course, the shown STCs 200 are merely an example, and may be replaced with any other suitable STC 200. Furthermore, although Fig. 3 shows a 2D MINFLUX sequence, where the probe positions 201 are arranged in the focal plane, the method according to the present invention may also be applied to a 3D MINFLUX sequence. In this case, the excitation light intensity distribution is typically a 3D donut or bottle beam (with a central intensity minimum flanked by areas of increasing intensity in all directions in space), and the STC 200 comprises probe positions 201 outside of (above and below) the focal plane.

**Fig. 4** shows a simplified scheme of a device 1 for determining a position of at least one emitter F in a sample S according to an embodiment of the present invention, particularly a MINFLUX microscope.

The device 1 comprises an activation light source 10 (e.g., a CW or pulsed laser source) for generating a beam of activation light A and an excitation light source 11 (e.g., a CW or pulsed laser source) for generating a beam of excitation light E.

A sample S comprising emitters F is provided, e.g., on a microscope slide held by a sample holder. To illuminate the sample S by the activation light A and the excitation light E, the corresponding light beams are focused into the sample S using an optical setup 13 comprising a microscope objective 14.

To generate the excitation light intensity distribution 100 with the local minimum 101 (see Fig. 2), the device 1 comprises a light modulation device 12, e.g., a spatial light modulator with a blazed grating, on which an adjustable phase pattern can be superimposed. A surface of the light modulation device 12 comprising the blazed grating is arranged in a conjugated plane with respect to a pupil plane of the objective 14 (or near such a conjugated plane given appropriate adjustments of the phase pattern), such that the phase pattern displayed on the surface generates the desired excitation light intensity distribution 100 in the focal plane in the sample due to interference. In particular, an excitation light intensity distribution 100 shaped as a 2D donut can be generated by a vortex phase pattern increasing gradually from a phase value of zero to a value of 2*n* · *π*, where n is a natural number (wherein particularly n=1) in a circumferential direction with respect to the optical axis in combination with a polarization modifying element (not shown in Fig. 4), e.g., a quarter wave plate, which generates circularly polarized light. A 3D donut, also termed bottle beam, can be obtained, in particular, by phase modulation of the excitation light beam with a phase pattern comprising concentric rings with a phase difference of *π*. Alternatively, a transmissive light modulation device 12, (e.g., a phase plate), may be used.

The device 1 further comprises a positioning device 15 comprising a first scanning device 15a, particularly a galvanometric scanner, a second scanning device 15b and a third scanning device 15c, which are particularly embodied as electro optical deflectors arranged in series and configured to deflect the excitation light beam in two directions (x and y) in the focal plane, and a fourth scanning device 15d for changing the position of the focus of the excitation beam in the sample along the optical axis (z-direction), wherein the fourth scanning device 15d is particularly a deformable mirror.

Furthermore, the device 1 comprises a detector 16, i.e., a point detector or an array detector configured to detect photons emitted by an emitter F in the sample S. A pinhole 22 is arranged in an image plane which is confocal with respect to a focal plane in the sample S.

A computation device 17 processes and/or analyzes the emission signal generated by the detector 16 and particularly determines the position values used to estimate the position of the at least one emitter F.

By means of a user interface 18, the speed parameter and particularly the selection from the fast operating mode FA and the slow operating mode SL can be obtained by means of a user input.

In addition, a control device 19 is functionally coupled at least to the activation light source 10, the excitation light source 11, the scanning devices 15a, 15b, 15c, 15d, the computation device 17 and the user interface 18.

The beam of excitation light E generated by the excitation light source 11 passes the second scanning device 15b and the third scanning device 15c and is phase modulated by the phase modulation device 12. The excitation light E is then reflected by a beam splitter 21, passes the fourth scanning device 15d and the first scanning device 15a, is reflected by a mirror 20 and is then focused by the objective 14 to form the excitation light intensity distribution 100 at the focus in the sample S.

The emission light D emitted by the emitter F in the sample S is picked up by the objective 14 and reflected by mirror 20 onto the first scanning device 15, which de-scans the emission light D. The de-scanned emission light D passes the dichroic beam splitter 21, the confocal pinhole 22, which removes out-of-focus light, and is detected by the detector 16.

The activation light A is coupled into the detection beam path at the dichroic beam splitter 21 and then travels via the fourth scanning device 15d, the first scanning device 15a and the mirror 20 to the objective 14, which focuses the activation light A into the sample S.

In particular, according to the present invention, in case the user input received by the user interface 18 indicates a speed parameter SP reflecting a fast operation mode FA, the intensity of the activation light A is adjusted by the control device 19 to a value at which at least two emitters E are activated in a reference volume between the maxima 102 of the excitation light intensity distribution 100 (see Fig. 2). The excitation light intensity distribution 100 is then moved through the sample S, and the emission light D is detected by the detector 16. In case the detected emission signal reaches a threshold indicating an emission signal above a background signal (i.e., the presence of at least one emitter F in the volume of interest), the activation light A is automatically switched off by a switch-off signal transmitted by the control device 19 to the activation light source 11 upon receipt of an input signal I from the detector 16 indicating the emission signal being above the background. Additionally, further parameters of the emission light, such as an emission lifetime and/or an emission spectrum may be analyzed by means of the detector 16 and the computation device 17 to determine an emission signal exceeding the background. In particular, the emission signal is continuously monitored by a monitoring circuit or monitoring module of the computation device 17 and, in case the signal exceeds the background, a trigger signal is transmitted by the monitoring circuit or module to a switching circuit or switching module of the control device 19, which then sends the switch-off signal to the activation light source 11 or an additional device which reduces the activation light intensity.

After the activation light A has been switched off, an initial position value is determined, e.g., by pinhole orbit scanning: to this end, a projection of the pinhole 22 into the focal plane in the sample S is moved to several locations by means of the first scanning device 15a (particularly the galvanometric scanner), while the excitation light intensity distribution 100 is kept stationary with respect to the sample S by the second scanning device 15b and the third scanning device 15c (particularly electrooptical deflectors). The initial position value is then determined by the computation device 17 using the positions of the pinhole 22 projection and the corresponding emission signals. Alternatively, e.g., the detection light can be picked up by an array detector and the light distribution on the array detector can be used to obtain the initial position value, or by other means known from the prior art.

After determining the initial position value, a MINFLUX localization may be performed by the device 1. To this end, the excitation light intensity distribution 100 is sequentially moved with its local minimum 101 (see Fig. 2) to probe positions 201 of a set of targeted coordinates, STC, 200 (see Fig. 3) using the second scanning device 15b and the third scanning device 15c (particularly electrooptical deflectors), the STC being centered on the previous position estimate and emission photons are detected by the detector 16 for each probe position 201. A new position estimate is then determined from the final position values by the computation device 17 based on the acquired photon counts and the probe positions 201. Next, the STC 200 is centered on the new position estimate, and the MINFLUX sequence is iteratively repeated with STCs 200 within a decreasing diameter L around the current position estimate. This process is particularly continued until the position estimate converges or alternatively until the emitter F is deactivated or bleached. In particular, in each iteration, the light intensity of the excitation light may be increased to compensate for the decreasing emission signal.

**Fig. 5** shows a schematic illustration of an exemplary spatial distribution obtained from a simultaneous MINFLUX localization of two emitters F1, F2. The actual positions of the emitters F1, F2 are indicated by stars. The black dots indicate the final position values P1, P2, P3 obtained by the method according to the invention. The final position values P1, P2, P3 are arranged in three groups G1, G2, G3. The final position values P1 (closed circles) belonging to the first group G1 have been obtained while the first emitter F1 was emitting light, while the second emitter F2 was in an inactive state. Likewise, the final position values P2 (open circles) corresponding to the second group G2 were obtained while the second emitter F2 was emitting light while the first emitter F1 was in an inactive state. Finally, the third group G3 contains final position values P3 (open squares) obtained while both emitters F1, F2 were emitting light. From the spatial distribution, information about the actual position of the two emitters F1, F2 can be obtained simultaneously from one MINFLUX sequence.

**Fig. 6** schematically depicts a time trace of emission signals from three emitters. At the time t₁, the intensity of the emission light D (particularly the photon count rate) drops from 3 I₀ to 2 I₀ indicating one emitter F entering an inactive state. The light intensity exhibits a further stepwise decrease from 2 I₀ to I₀ at time t₂, which is caused by a further emitter F entering an inactive (dark) state. Finally, at time t₃, one of the emitters cycles back to the active state as indicated by a stepwise increase of the light intensity from I₀ to 2 I₀.

### List of reference signs

- 1: Device for determining a position of at least one emitter in a sample
- 10: Activation light source
- 11: Excitation light source
- 12: Light modulation device
- 13: Optical setup
- 14: Objective
- 15a: First scanning device
- 15b: Second scanning device
- 15c: Third scanning device
- 15d: Fourth scanning device
- 16: Detector
- 17: Computation device
- 18: User interface
- 19: Control device
- 20: Mirror
- 21: Beam splitter
- 22: Pinhole
- 100: Excitation light distribution
- 101: Local minimum
- 102: Maximum
- 103: Intensity increase area
- 104: Maximum-to-maximum distance
- 200: Set of targeted coordinates, STC
- 201: Probing positions
- A: Activation light
- D: Emission light
- E: Excitation light
- F: Emitter
- FA: Fast operating mode
- I: Input signal
- MP: Measuring parameter
- P: Final position value
- S: Sample
- SL: Slow operating mode
- SP: Speed parameter

## Claims

1. A method for determining a position of at least one emitter (F) in a sample (S), wherein according to at least one measuring parameter (MP),
- the sample (S) is illuminated by activation light (A) to activate at least one emitter (F), such that the at least one emitter (F) emits emission light (D) when excited by excitation light (E), and
in at least one localization step:
- the sample (S) is illuminated by an excitation light intensity distribution (100) of the excitation light (E) to excite the at least one emitter (F), wherein the excitation light intensity distribution (100) comprises a local minimum (101) flanked by maxima (102),
- the excitation light intensity distribution (100) is positioned at a plurality of probing positions (201) determined based on an initial position value,
- an emission signal from the at least one emitter (F) is detected for each of the probing positions (201),
- at least one final position value (P1, P2, P3) is determined from the emission signals and the associated probing positions (201), and
- a position of the at least one emitter (F) is estimated based on the at least one final position value (P1, P2, P3),
**characterized in that**
a speed parameter (SP) is adjusted by a user input wherein the at least one measuring parameter (MP) is adjusted based on the adjusted speed parameter (SP), and wherein an average time between a start of the illumination of the sample (S) by the activation light (A) and the estimation of the position of the at least one emitter (F) depends on the speed parameter.

2. The method according to claim 1, **characterized in that** in a search step prior to the at least one localization step,
- the sample (S) is illuminated by the activation light (A) to activate the at least one emitter (F),
- the sample (S) is illuminated by the excitation light (E) to excite the at least one emitter (F),
- a further emission signal from the at least one emitter (F) is detected, and
- the initial position value of the at least one emitter (F) is determined based on the further emission signal.

3. The method according to claim 1 or 2, **characterized in that** in case the speed parameter (SP) has been adjusted to a value indicating a slow operating mode (SL), the intensity of the activation light (A) is adjusted, particularly in the search step, such that an average of one emitter is activated in a reference volume within the maxima (102) of the excitation light distribution (100), and wherein in case the speed parameter (SP) has been adjusted to a value indicating a fast operating mode (FA), the intensity of the activation light (A) is adjusted in the search step, such that an average of at least two emitters (F), particularly 2 to 10 emitters (F), more particularly 2 to 3 emitters (F), are activated in the reference volume.

4. The method according to one of the preceding claims, **characterized in that** a plurality of final position values (P1, P2, P3) is generated, wherein in case at least two emitters (F) have been activated in the reference volume, the positions of the at least two emitters (F) are simultaneously estimated from the final position values (P1, P2, P3).

5. The method according to claim 4, **characterized in that** a spatial distribution is generated from the final position values (P1, P2, P3), wherein the positions of the at least two emitters (F) are simultaneously estimated based on the spatial distribution.

6. The method according to one of the preceding claims, **characterized in that** the emitters (F) are capable of entering an inactive state in which the emitters (F) are unable to emit emission light (D) or unable to be excited by the excitation light (E), wherein a time trace of the emission signals is obtained, wherein a decrease, particularly a stepwise decrease, of the emission signal in said time trace indicates one of the emitters (F) entering the inactive state and an increase, particularly a stepwise increase, of the emission signal in said time trace indicates one of the emitters (F) leaving the inactive state, and wherein information from the time trace about the emitters (F) entering or leaving the inactive state is used to simultaneously estimate the positions of the at least two emitters (F).

7. The method according to any one of the preceding claims, **characterized in that** in case the detected emission signal, particularly the further emission signal detected in the search step, exceeds a background emission signal, the activation light (A) is automatically switched off, and the at least one localization step is automatically initiated.

8. The method according to any one of the preceding claims, **characterized in that** an emission lifetime of the at least one emitter (F) is determined from the detected emission signal, particularly the further emission signal detected in the search step, wherein in case the determined emission lifetime is within a pre-determined range, the activation light (A) is automatically switched off, and the at least one localization step is automatically initiated.

9. The method according to any one of the preceding claims, **characterized in that** a spectral analysis of the detected emission signal, particularly the further emission signal detected in the search step, is performed, wherein in case the spectral analysis indicates that the emission signal is in a pre-determined spectral range, the activation light (A) is automatically switched off, and the at least one localization step is automatically initiated.

10. The method according to one of the claims 7 to 9, **characterized in that** the activation light (A) is switched off and the at least one localization step is initiated within a response time of 50 µs or less, particularly 20 µs or less, more particularly 10 µs or less, even more particularly 1 µs or less, after detection of the emission signal.

11. The method according to one of the preceding claims, **characterized in that** the intensity of the activation light (A) is adjusted based on the detected emission signal.

12. A device (1) for determining a position of at least one emitter (F) in a sample (S), particularly by the method according to one of the claims 1 to 11, comprising
- an activation light source (10) configured to illuminate a sample (S) with activation light (A) to activate at least one emitter (F), such that the at least one emitter (F) emits emission light (D) when excited by excitation light (E),
- an excitation light source (11) configured to illuminate the sample (S) with the excitation light (E) to excite the at least one emitter (F),
- a light modulation device (12) configured to generate an excitation light intensity distribution (100) of the excitation light (E) comprising a local minimum (101) flanked by maxima (102),
- an optical setup (13) configured to illuminate the sample (S) with the excitation light intensity distribution (100),
- at least one positioning device (15a, 15b, 15c, 15d) configured to position the excitation light distribution (100) at a plurality of probing positions (201),
- a detector (16) configured to detect an emission signal from the at least one emitter (F) for each of the probing positions (201),
- a computation device (17) configured to determine the probing positions (201) based on an initial position value, determine at least one final position value from the detected emission signals and the associated probing positions (201) and estimate the position of the at least one emitter (F) based on the at least one final position value,
**characterized in that**
the device (1) comprises a user interface (18) configured to obtain a user input comprising an adjustment of a speed parameter (SP), and a control device (19) configured to adjust at least one measuring parameter (MP) based on the adjusted speed parameter (SP), wherein an average time between a start of the illumination of the sample (S) by the activation light (A) and estimation of the position of the at least one emitter (F) depends on the speed parameter (SP).

13. The device (1) according to claim 12, **characterized in that** the control device (19) is configured to adjust an intensity of the activation light (A), particularly during the search step, such that an average of at least two emitters (F), particularly 2 to 10 emitters (F), more particularly 2 to 3 emitters (F), are activated in a reference volume within the maxima (102) of the excitation light distribution (100).

14. The device (1) according to claim 12 or 13, **characterized in that** the computation device (17) is configured to determine the initial position value of the at least one emitter (F) based on a further emission signal detected in a search step, wherein the control device (19) is configured to receive an input signal (I) from the detector (16) upon detection of the further emission signal by the detector (16), wherein the control device (19) is configured to automatically switch off the activation light (A) and automatically initiate the localization step based on the input signal (I), particularly within a response time of 50 µs or less, more particularly 20 µs or less, even more particularly 10 µs or less, even more particularly 1 µs or less, after detection of the emission signal by the detector (16).

15. A computer program comprising program code comprising instructions to cause the device (1) according to one of the claims 12 to 14 to execute the steps of the method according to one of the claims 1 to 11.
